# EUROPÄISCHE PATENTSCHRIFT

(11) **EP 1 562 272 B1**
(45) Veröffentlichungstag und Bekanntmachung des Hinweises auf die Patenterteilung: **07.09.2016**
(21) Anmeldenummer: 04029191.6
(22) Anmeldetag: 09.12.2004
(51) Int. Cl.: H02H 3/04, H01T 1/12

(54) **Anordnung zur Zustandskontrolle und Protokollierung von Überspannungsschutz-Geräten, insbesondere bei deren Einsatz in Niederspannungsnetzen oder der Informationstechnik**
Arrangement for checking and recording of the status of an overvoltage protection device, particularly for installation in low-voltage networks or information systems
Ensemble pour le contrôle et l'enregistrement de l'état d'un dispositif de protection contre les surtensions, en particulier pour installation dans des réseaux à basse tension ou systèmes d'information.

(30) Priorität: 14.01.2004 DE 102004002022; 12.02.2004 DE 102004006987
(43) Veröffentlichungstag der Anmeldung: 10.08.2005
(73) Patentinhaber: DEHN + SÖHNE GMBH + CO. KG, 92306 Neumarkt (DE)
(72) Erfinder: Igl, Peter, Dipl.-Ing., 90602 Seligenporten (DE); Lachner, Helmut, 92364 Deining (DE)
(74) Vertreter: Kruspig, Volkmar

(56) Entgegenhaltungen:
- EP-A- 0 350 477
- EP-A- 0 915 345
- EP-A- 1 022 837
- EP-A- 1 179 827
- WO-A-99/35691

## Beschreibung

Die Erfindung betrifft eine Anordnung zur Zustandskontrolle und Protokollierung von Überspannungsschutz-Geräten, insbesondere bei deren Einsatz in Niederspannungsnetzen oder der Informationstechnik, umfassend mindestens eine, mit dem Überspannungsschutz-Gerät baulich vereinte Fehlererkennungseinheit, gemäß Oberbegriff des Patentanspruchs 1.

Zur Störmeldung von Überspannungsschutz-Geräten, welche beispielsweise Gasentladungsableiter enthalten, ist es bekannt, diese über eine thermische Auslösevorrichtung auf mögliche Temperaturüberschreitungen zu überwachen. In der DE 101 34 752 A1 wird in diesem Sinne ein Auslösemechanismus beschrieben, wobei durch das Schmelzen eines dort vorhandenen Lotes im Falle einer Überlastung des Gasentladungsableiters eine Fehlerüberwachung realisiert wird.

Gemäß DE 199 07 319 A1 oder EP 0 755 582 B1 wird konkret erläutert, wie ein thermischer Auslösemechanismus mit einem Signalisierungskontakt versehen werden kann, um eine Anzeige des Fehlerzustands eines Gasentladungsableiters zu ermöglichen.
Den vorstehend beschriebenen Anordnungen ist gemeinsam, dass grundsätzlich eine Signalgeberschaltung notwendig ist, um einen erkannten Fehler mit Hilfe von optischen oder akustischen Signalen anzuzeigen.

Ein wesentlicher Nachteil des geschilderten Standes der Technik besteht darin, dass der Stromkreis der Signalgeberschaltung in das Überspannungsschutz-Gerät eingeführt werden muss. Dies bedingt wiederum Maßnahmen zur Trennung der Stromkreise des Überspannungsschutzes und der Signalgeberschaltung. Eine solche Maßnahme erfordert jedoch einen hohen Platzbedarf im Gehäuse des Überspannungsschutz-Geräts und führt zu einem hohen Aufwand bei der Installation und Verdrahtung der Signaigeberschaltung.
Eine alternative Fehlersignalisierung wird in der EP 0 845 843 B1 erläutert. Dort erfolgt die Fehleranzeige über ein vorgespanntes Federelement, das bei Erreichen einer gewissen Temperatur die Anzeige frei gibt. Da die Anzeige nur optisch am Gehäuse vorgenommen wird, ist kein Hilfskreis notwendig. Nachteilig hierbei ist allerdings, dass keine Fernmeldung möglich ist. Die Kontrolle des Fehlerzustands ist nur optisch und unmittelbar am Überspannungsschutz-Gerät möglich.

Gemäß der DE 39 08 236 A1 ist es ebenso bekannt, eine Fehlerauslösung und Anzeige über temperaturabhängige, sogenannte PTC-Widerstände vorzunehmen, die bei einer bestimmten Erwärmung hochohmig werden und eine optische oder akustische Anzeige auslösen können. Nachteilig hier ist wiederum, dass die Energie für die akustische oder optische Anzeige aus dem Stromkreis entnommen werden muss, in dem das Überspannungsschutz-Gerät angeordnet ist. Eine Fehlermeldung ist gemäß der zitierten Lösung des Standes der Technik nicht möglich.

In elektrischen Anlagen sind Revisionen in gewissen Zeitabständen durchzuführen, bei denen alle Anlagenkomponenten einer Überprüfung zu unterziehen sind.
Überspannungsschutz-Geräte, die keine Meldevorrichtung bezüglich ihres aktuellen Funktionsstatus besitzen, müssen demontiert werden und sind diskret mit einem Messgerät zu untersuchen.
Zur Dokumentation der Revision in Anlagen mit hohen Sicherheitsanforderungen, z. B. in Kraftwerken oder im Bereich der Petrochemie, ist darüber hinaus eine Protokollierung der Überprüfung mit Darstellung der einzelnen Überprüfungsschritte und -ergebnisse erforderlich.

Am Markt derzeit verfügbare Überspannungsschutz-Geräte mit einer Fehleranzeige am Gerät oder über einen integrierten Schaltkontakt ermöglichen zwar die Kontrolle vor Ort bzw. eine Fernmeldung, eine automatisierte Protokollierung ist jedoch nicht möglich und wird nicht unterstützt.

Besondere Probleme bestehen bei der Überwachung von Überspannungsschutz-Geräten für das Niederspannungsnetz und wiederum beim Einsatz von Überspannungsschutz-Geräten im Bereich der Informafiionstechnik. Dies ergibt sich daraus, dass in diesen Systemen dem Stromkreis, in dem das Überspannungsschutz-Gerät eingesetzt ist, keine Energie entzogen werden kann, um eine denkbare Fehleranzeige zu betreiben.
Auch ist diejenige Energie, die zur Überlastung eines Überspannungsschutz-Geräts führen kann, in der Informationstechnik wesentlich geringer als in Niederspannungsnetzen.

Aus der gattungsbildenden EP 0 915 345 A2 ist ein Überspannungsableiter mit einer Vorrichtung zur Anzeige eines Fehlerstroms vorbekannt. Ein dortiger Informationsträger umfasst eine Antenne. Von einer Lesestation ausgestrahlte Energie wird von der Antenne in den Informationsträger eingekoppelt und tritt über einen Stromleiter in Wechselwirkung mit einem Tag. Im Tag gespeicherte Informationen werden über die Antenne abgestrahlt und von der Lesestation empfangen. Tritt ein Störungsfall auf, wird ein dortiger Stromleiter zerstört oder es wird eine sonstige Veränderung im Informationsträger bewirkt. Von der Lesestation kann dann in diesem Fall ein Signal empfangen werden, welches den veränderten Zustand des Informationsträgers erkennt, wodurch der fehlerbehaftete Überspannungsableiter unabhängig von optischen Bedingungen identifizierbar ist.

Die EP 1 022 837 A2 zeigt eine Überspannungsschutzeinheit mit der Möglichkeit der Erfassung des Leckstroms durch einen Varistor mittels thermischen Sensor, und zwar im Verhältnis zur Umgebungstemperatur. Wenn eine mögliche Übertemperatur droht, wird über einen Mikroprozessor eine Anzeige mit optischem und/oder akustischem Signalgenerator ausgelöst.

Aus dem Vorstehenden ist es daher Aufgabe der Erfindung, eine weiterentwickelte Anordnung zur Zustandskontrolle und Protokollierung von Überspannungsschutz-Geräten, insbesondere bei deren Einsatz in Niederspannungsnetzen oder der Informationstechnik anzugeben, wobei die Anordnung galvanisch und energetisch getrennt den möglichen Fehlerfall detektiert und in der Lage ist, das Fehlersignal in einer solchen Weise darzustellen, dass sowohl eine Anzeige vor Ort als auch eine Anzeige mittels Fernabfrage möglich wird.

Letztendlich ist es Aufgabe der Erfindung sicherzustellen, dass bei durchzuführenden Revisionen mit Überprüfung von Anlagenkomponenten relevante Daten funktionsfähiger und noch intakter Überspannungsschutz-Geräte protokollierbar sind, um z. B. bei geänderten Anwendungserfordernissen oder unter vorbeugendem Aspekt dann diejenigen Überspannungsschutz-Geräte oder Überspannungsschutz-Elemente auszutauschen, bei denen z. B. bis zur nächsten fälligen Revision unter Umständen Funktionsstörungen zu erwarten sind.

Die Lösung der Aufgabe der Erfindung erfolgt mit einer Anordnung zur Zustandskantrolle und Protokollierung von Überspannungsschutz-Geräten gemäß Patentanspruch 1, wobei die Unteransprüche zweckmäßige Ausgestaltungen und Weiterbildungen des Grundgedankens der Erfindung darstellen.

Demnach wird eine an sich bekannte Fehlererkennungseinheit., die z. B. eine temperaturabhängige Schalteinrichtung sein kann, über einen RFID-Transponder ausgelesen und abgefragt. Der RFID=Transponder befindet sich im selben Gehäuse wie die eigentlichen Überspannungsschutz-Elemente, welche das Überspannungsschutz-Gerät bilden.

RFID (Radio Frequency Identification)-Transponder gehören zum Stand der Technik. Im Unterschied zu sogenannten Chipkarten wird die Energieversorgung des Datenträgers des Transponders sowie der Datenaustausch zwischen Datenträger und Lesegerät nicht durch galvanische Kontaktierung, sondern unter Verwendung magnetischer oder elektromagnetischer Felder vorgenommen. Demnach besteht ein RFID-System aus den Komponenten Transponder, der an die zu identifizierenden Objekte angebracht wird, und einem Erfassungs- oder Lesegerät, das je nach Ausführung und eingesetzter Technologie als Lese- oder Schreib-/Lese-Einheit erhältlich ist.
Der Transponder, der den eigentlichen Datenträger des RFID-Systems darstellt, besteht üblicherweise aus einem Koppelefement sowie einem Mikrochip. Passive Transponder beinhalten keine eigene Energieversorgung. Die gesamte Energie zum Betrieb eines passiven Transponders wird dem elektrischen oder magnetischen Feld des Lesegeräts entnommen.

Ein-.Bit-Transponder sind in der Lage, zwei Systemzustände darzustellen, und zwar einerseits den Zustand Transponder im Ansprechbereich oder andererseits den Zustand kein Transponder im Ansprechbereich. Bei weitverbreiteten Radiofrequenz-Verfahren zum Auslesen von RFTD-Transpondern wird mit sogenannten L-C-Schwingkreisen gearbeitet, welche auf eine definierte Resonanzfrequenz abgeglichen sind. Entspricht z. B. die Eigenfrequenz des Wechselfeldes des Transponder-Schwingkreises der Resonanzfrequenz des Sendeschwingkreises, so entsteht eine Resonanzschwingung., die dem magnetischen Wechselfeld Energie entzieht. Der hier entstehende Anschwingvorgang kann als Spannungs- oder Stromänderung erfasst werden.

Es hat sich in überraschender Weise gezeigt, dass trotz zu erwartender erheblicher EMV-Probleme bei dem Einsatz und der Überwachung von Überspannungsschutz-Geräten auf die Technologie von RFID-Systemen zurückgegriffen werden kann.
Bei der Verwendung eines RFID-Transponders als Ein-Bit-Transponder wird im Fehlerfall des Überspannungsschutz-Geräts über die Fehlererkennungseinheit die Resonanzfrequenz des Transponders verändert oder es wird der Schwingkreis des Transponders unterbrochen.

Bei der Ausführung des RFID-Transponders als passiver Transponder mit induktiv gekoppelter Spannungsversorgung sowie vorhandener Identifikationsschaltung mit Speicherfunktion, welche herstellungs- und anwendungsspezifische Informationen sowie Prüf- und Kenndaten enthält, wird im Fehlerfall des Überspannungsschutz-Geräts die Fehlererkennungseinheit verantasst, den Transponder-Antennenkreis kurzzuschließen oder zu unterbrechen. Alternativ kann durch Zu- oder Abschalten von Antennenspulenwindungen oder Schwingkreiskapazitäten die Schwingkreisfrequenz gezielt verändert werden.

Die Fehlererkennungseinheit kann mindestens eine temperaturabhängige Schalteinrichtung, insbesondere eine Thermosicherung umfassen, welche dem jeweiligen Überspannungsschutz-Element des Überspannungsschutz-Geräts, thermisch in Kontakt stehend, zugeordnet ist.

Zum Reduzieren des Einflusses elektromagnetischer Felder weist die Identifikationsschaltung des Transponders eine Einrichtung zum Schutz gegen derartige Felder auf, so dass die Auswirkungen üblicher Stoßströme auf die Überwachungs Funktionsbaugruppe reduzierbar sind. Eine derartige. Schutzschaltung kann als Spannungsbegrenzungs-Baugruppe oder als Sperrfilter ausgeführt sein.

Für das Erkennen eines Fehlerzustands wird erfindungsgemäß auf die Erwärmung der Überspannungsschutz-Elemente bei maximal zulässiger Verlustleistun abgestellt. Damit wird nicht, wie beim Stand der Technik, das Auslösen einer Anzeige bezüglich eines Fehlerzustands vom Schmelzpunkt eines z. B. Lotes abhängig.

Erfindungsgemäß ist der RFID-Transponder auf einer Leiterplatte angeordnet und es wird die Antenne des Transponders als Rahmenantenne entlang der Außenrandbereiche der Leiterplatte ausgeführt.

Zwischen den Antennenspulen-Anschlusserden ist die Fehlererkennungseinheit auf der Leiterplatte in Form einer oder mehrerer in Serie geschalteten Thermosicherungen befindlich. Der RFID-Transponder-Leiterplatte benachbart ist ein Träger zur Aufnahme der Überspannungsschutz-Elemente, z. B. in Form von Gasentladungsableitern befindlich.

Die Überspannungsschutz-Elemente auf dem Träger stehen in thermischem Kontakt zu der oder den thermischen Schalteinrichtungen auf der Transponder-Leiterplatte.
Die Transponder-Leiterplatte erfüllt gleichzeitig eine Isolations- und Schirmungsfunktion gegenüber dem Träger mit den Überspannungsschutz-Elementen.

Gemäß einer Ausgestaltung der Erfindung sind die Transponder-Leiterplatte und der Träger zur Aufnahme der Überspannungsschutz-Elemente parallel nebenander im Gehäuse des Überspannungsschutz-Geräts als austauschbare, getrennte Funktionsbaugruppen befindlich. Der Träger zur Aufnahme der Überspannungsschutz-Elemente kann auch als Leiterplatte, bestehend aus einem kupferkaschierten Material, bestehen.

Die wie vorstehend beschrieben ausgestaltete Anordnung zur Zustandskontrolle und Protokollierung von Überspannungsschutz-Geräten wird über ein Handlesegeräte abgefragt. Gegebenenfalls werden im Transponderspeicherchip abgelegte Daten ausgelesen und je nach Zustandskontrollergebnis wird ein Austausch des jeweiligen Überspannungsschutz-Geräts vorgenommen.

In einer Ausführungsform der Erfindung besteht die Möglichkeit, dass fest in der jeweiligen, Überspannungsschutz-Geräte enthaltenden Anlage ein oder mehrere Lesegeräte zur zyklischen Überwachung vorgesehen sind, wobei das Lesegerät Fehlermeldungen optisch und/oder akustisch erzeugt und Fernabfragedaten über den Zustand der jeweiligen Überspannungsschutz-Geräte bereit stellt.

Es liegt im Sinne der Erfindung, dass der RFID-Transponder als induktiv gekoppelter Transponder mit einem zusätzlichen Sensor zur Erfassung physikalischer Größen ausgeführt ist, die für den Zustand des oder der Überspannungsschutz-Elemente im Überspannungsschutz-Gerät relevant sind. Insbesondere ist der Sensor als Temperatursensor zur Erfassung der Temperatur und damit der Belastung des oder der Überspannungsschutz-Elemente ausgelegt.

Im einfachsten Fall geht es bei der Zustandskontrolle eines Überspannungsschutz-Geräts darum, ob ein ordnungsgemäßer Betrieb möglich ist oder inwieweit ein Defekt vorliegt. Nur diese quasi digitalen Zustände müssen übertragen werden, so dass die zu übertragende Information darauf reduziert werden kann, ob die in der Identifikationsschaltung des Transponders abgelegten Daten gelesen werden können oder nicht. Die Auswertung über den Funktionszustand des jeweiligen Überspannungsschutz-Geräts erfolgt im bzw. mit Hilfe des Lesegeräts.

Durch das erfindungsgemäß vorgeschlagene Unterbrechen oder Kurzschließen der Antenne des Transponders kann mit einfachen Mitteln ein Ein-/Ausschalten der Identifikationsschaltung erfolgen. Als Alternative stellt sich das bereits erwähnte Verstimmen des Antennenkreises durch Zu- oder Abschalten von Windungen einer Rahmenantenne dar. Diese Veränderung der Resonanzfrequenz ist vom Lesegerät erkennbar, so dass auf eine Zustandsänderung des zu überwachenden Gerätes geschlussfolgert werden kann. Das technische Realisieren des Zu- oder Abschaltens der Antenne bzw. des Antennenkreises erfolgt über die erwähnte thermisch gesteuerte Schalteinheit, z. B. mittels einer Temperatursicherung. Die temperaturabhängige Schalteinrichtung erfasst dabei die Temperatur der zu überwachenden Elemente des Überspannungsschutz-Geräts. Aufgrund des Zusammenhangs zwischen dem Energieeintrag und der Erwärmung des jeweiligen Bauteils kann bei Überschreiten der maximal zulässigen Verlustleistung ein sicheres Auslösen der temperaturabhängigen Schalteinrichtung erfolgen.

Die Erfindung soll nachstehend anhand eines Ausführungsbeispiels sowie unter Zuhilfenahme von Figuren näher erläutert werden.

Hierbei zeigen:

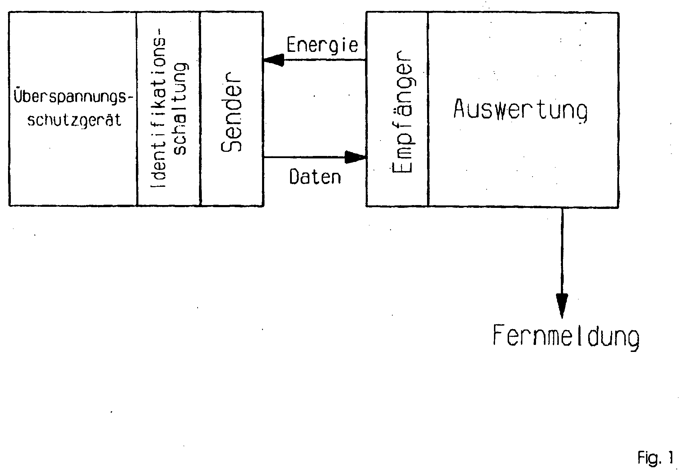

- Fig. 1: eine Prinzipdarstellung des berührungslosen Auslesens von Funktionseigenschaften eines Überspannungsschutz-Geräts;
- Fig. 2: eine Seitenansicht einer realisierten Transponder-Baugruppe auf einer Leiterplatte mit Thermosicherungen;
- Fig. 3: eine Zusammenstellungszeichnung eines Überspannungsschutz-Geräts mit den Funktionsbaugruppen Überspannungsschutz und Überwachung;
- Fig. 4: eine Querschnittsdarstellung durch ein montiertes Überspannungsschutz-Gerät gemäß Fig. 3 mit erkennbarer thermischer Lagezuordnung zwischen den Überspannungsschutz-Elementen einerseits und den Thermosicherungen als Schaltelement andererseits und
- Fig. 5: eine beispielhafte Transponder-Schutzschaltung.

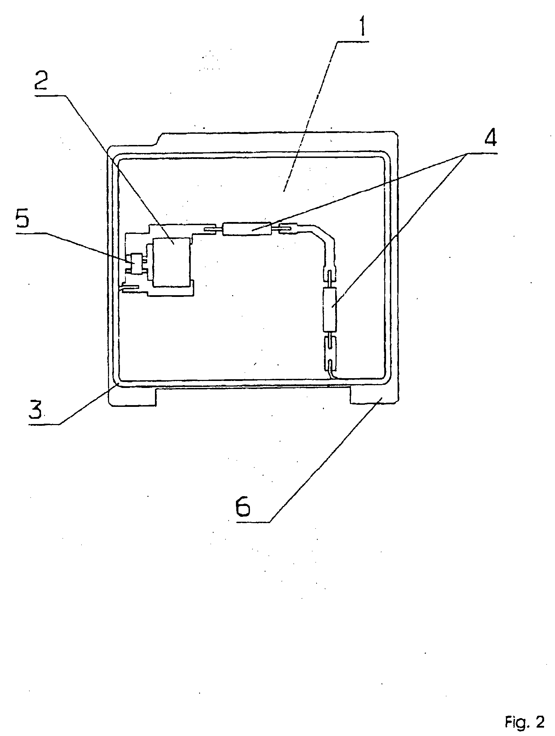

Die Transponder-Baugruppe 6 ist gemäß der Darstellung nach Fig. 2 auf einer Leiterplatte 1 realisiert, die eine Identifikationsschaltung 2, eine Antenne 3 und temperaturabhängige Schalteinrichtungen 4 sowie einen Schaltkreis mit Schutzschaltung 5 aufnimmt.

Die Antenne 3 ist gemäß Ausführungsbeispiel als Rahmenantenne ausgeführt. Die Kontaktierung der Antenne 3 an die Identifikationsschaltung 2 erfolgt über mindestens eine temperaturabhängige Schalteinrichtung 4 sowie zugehörige Leiterbahnen.

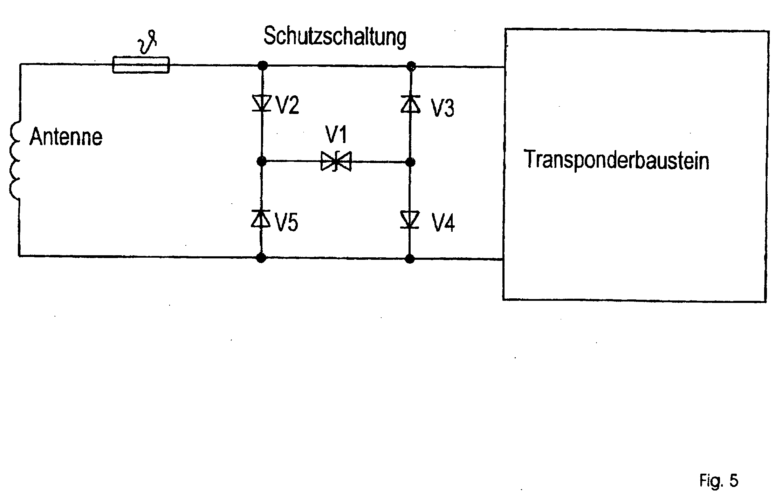

Bei Applikationen mit Überspannungsschutz-Geräten, die hohe Stoßströme führen können, wird die Identifikationsschaltung 2 auf die besonderen Umgebungsbedingungen, d. h. auf die vorhandenen starken elektromagnetischen Felder angepasst. Zu diesem Zweck ist die spezielle Schutzschaltung 5 an den Anschlüssen der Identifikationsschaltung 2 vorgesehen (siehe auch Fig. 5).

Im Falle des Auslösens der mindestens einen temperaturabhängigen Schalteinrichtung 4 wird die Verbindung zwischen Identifikationsschaltung 2 und der Rahmenantenne 3 unterbrochen, so dass der Transponder induktiv nicht mehr angeregt werden kann. Diese nicht mehr mögliche Anregung entspricht dann einem Fehlerzustand des Überspannungsschutz-Geräts, so dass ein Austausch vorzunehmen ist.

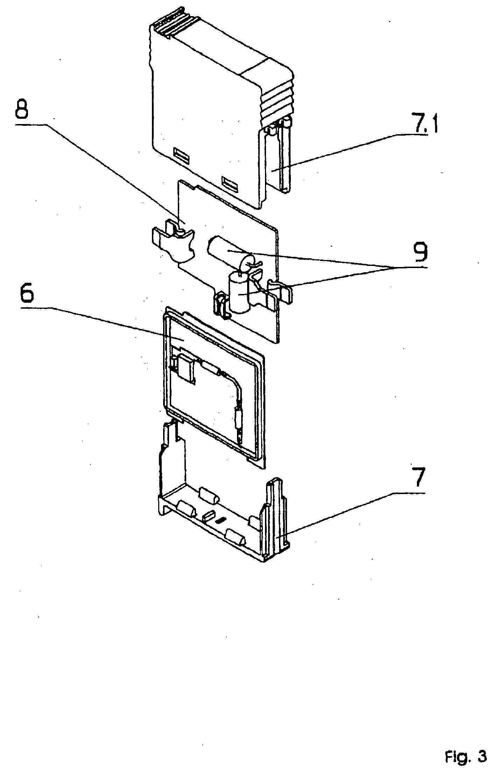

Fig. 3 macht deutlich, dass die Leiterplatte 1 der Transponder-Baugruppe 6 in einem Gehäuseteil 7 aufgenommen ist, wofür beispielsweise im Gehäuseteil 7 nutförmige Führungsaufnahmen vorgesehen sind.

Die Komponenten des Überspannungsschutzes 9, z. B. Gasentladungsableiter, sind auf einem Träger 8 montiert, welcher ebenfalls eine Leiterplatte sein kann.

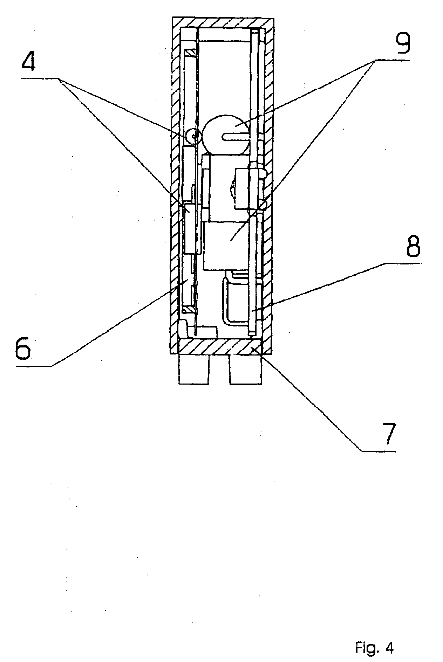

Die Anordnung der temperaturabhängigen Schalteinrichtungen 4, z. B. von Thermosicherungen, erfolgt in einer entsprechenden Lagebeziehung zu den zu überwachenden Bauteilen 9, und zwar derart, dass thermische Energie der Bauteile 9 möglichst ungehindert zur jeweiligen Thermosicherung übertragen werden kann. Zu diesem Zweck besteht die Möglichkeit, dass die Leiterplatte 1 der Transponder-Baugruppe 6 im Bereich der Lage der Schalteinrichtung 4 eine Aussparung aufweist, wie dies die Fig. 4 deutlich macht. Diese Aussparung ermöglicht einen verbesserten, innigen Kontakt der Schalteinrichtung 4 mit dem jeweiligen zu überwachenden Bauteil 9.

Die Leiterplatte 1 befindet sich gemäß Ausführungsbeispiel nach Fig. 3 im wesentlichen parallel zum Träger 8, welche die Überspannungsschutz-Elemente aufnimmt. Ein oberes Gehäuseteil 7.1 umschließt die Anordnung aus Transponder-Baugruppe und dem eigentlichen Überspannungsschutz-Gerät, gebildet durch den Träger 8 mit den dort vorgesehenen Bauteilen bzw. Elementen 9.

Wie aus den Fig. 3 und 4 ersichtlich, sind alle Bauteile der Transponder-Baugruppe auf der den Bauteilen des Überspannungsschutzes gegenüberliegenden Leiterplattenseite angeordnet. Die Leiterplatte 1 erfüllt ergänzend die Funktion einer elektrischen Isolation und Schirmung, insbesondere mit Blick auf die Eigenschaften der Identifikationsschaltung 2.

Um die in der Transponder-Baugruppe abgelegten Informationen zu nutzen, wird auf an sich bekannte Lesegeräte zurückgegriffen.

Bei einem Handgerät zum Auslesen einzelner Geräte wird jeweils nur einer, in einem Überspannungsschutz-Gerät montierter Transponder, der im Lesebereich des Lesegeräts befindlich ist, überprüft. Diese Überprüfung ist sowohl im montierten als auch im demontierten Zustand möglich. Über eine Abfrageroutine, die mit dem Lesegerät gestartet wird, beginnt die Untersuchung des Transponderzustands. Wird kein Transponder erkannt, erfolgt eine Fehlermeldung bezogen auf das Überspannungsschutz-Gerät. Wird hingegen ein Transponder erkannt, wird der im Transponder abgelegte Datensatz übertragen, im Lesegerät aufbereitet und protokolliert. Darüber hinaus werden die für die Dokumentation wichtigen Kennwerte, z. B. Prüfdaten, angezeigt und für die weitere Verarbeitung gespeichert.

Ein fest installiertes Lesegerät kann zur gleichzeitigen Überwachung mehrerer Überspannungsschutz-Geräte eingesetzt werden. Insbesondere kommen hier Lesegeräte zum Einsatz, die eine größere Lesereichweite besitzen. Alle in Lesereichweite befindlichen Transponder werden kontinuierlich abgefragt. Wird erkannt, dass ein Transponder nicht mehr reagiert, wird eine Fehlermeldung generiert. Über diese Fehlermeldung wird das defekte ÜberspannungsschutzGerät identifiziert und dem Anwender diese Information über eine lokale Anzeige oder eine Fehlermeldung signalisiert.

Aufgrund der Möglichkeit, den Transponder zusätzlich in ein Gehäuse eines Überspannungsschutz-Geräts zu integrieren, ist eine mögliche Nachrüstung gegeben. Herstellungsseitig wird bei Fertigung und Montage der Überspannungsschutz-Geräte in der Identifikationsschaltung des jeweiligen Transponders ein Datensatz abgespeichert. Dieser Datensatz enthält Informationen wie Typ, Herstelldatum, Prüf- und/oder Kennwerte, die bei einer späteren Fehlererkennung bzw. zu Dokumentationszwecken, aber auch zur Erkenntnisgewinnung im Bereich der technischen Weiterentwicklung verwendet werden können.

Aufgrund der zum Erreichen einer entsprechenden Reichweite notwendigen Ausbildung der Antenneninduktivität werden bereits bei Stoßströmen, die unterhalb der Belastungsgrenze der Überspannungsschutzgeräte liegen, Spannungen induziert, welche den Transponder-Baustein zerstören können. Um dies zu verhindern, wird unmittelbar vor dem Eingang des Transponder-Bausteins die bereits erwähnte Schutzschaltung oder ein Sperrfilter, z. B. in einer Konfiguration gemäß Schaltungsanordnung nach Fig. 5 ausgebildet. Die Schutzschaltung soll hier eine möglichst geringe Kapazität besitzen und das Übertragungssignal nicht oder nur in einem geringen Maße beeinflussen.

## Patentansprüche

1. Anordnung zur Zustandskontrolle und Protokollierung von Überspannungsschutz-Geräten, insbesondere bei deren Einsatz in Niederspannungsnetzen oder der Informationstechnik, umfassend mindestens eine, mit dem Überspannungsschutz-Gerät vereinte Fehlererkennungseinheit, wobei die Fehlererkennungseinheit über einen in einem Gehäuse befindlichen passiven RFID-Transponder (6) ausles- und abfragbar ist, sowie im Fehlerfall die Fehlererkennungseinheit den Transponderantennenkreis (3) kurzschließt oder unterbricht,
**dadurch gekennzeichnet, dass**
die Fehlererkennungseinheit mit dem Überspannungsschutz-Gerät in einem Gehäuse baulich vereint ist, die Fehlererkennungseinheit als temperaturabhängige Schalteinrichtung (4) ausgebildet ist, welche dem jeweiligen Überspannungsschutz-Element (9) des Überspannungsschutz-Geräts, thermisch in Kontakt stehend, zugeordnet ist, wobei für das Erkennen eines Fehlerzustands auf die Erwärmung der Überspannungsschutz-Elemente (9) bei maximal zulässiger Verlustleistung abgestellt wird, der RFID-Transponder (6) auf einer Leiterplatte (1) angeordnet und die Antenne (3) des Transponders (6) als Rahmenantenne entlang der Außenrandbereiche der Leiterplatte (1) ausgeführt ist, der RFID-Transponder-Leiterplatte (1) benachbart ein Träger (8) zur Aufnahme der Überspannungsschutz-Elemente (9) befindlich ist, die Transponder-Leiterplatte (1) und der Träger (8) zur Aufnahme der Überspannungsschutz-Elemente (9) parallel nebeneinander im Gehäuse des Überspannungsschutz-Geräts als austauschbare, getrennte Funktionshaugruppen befindlich sind und der Transponder (6) einen Temperatursensor zur Erfassung der Temperatur und damit der Belastung des oder der Überspannungsschutz-Elemente (9) umfasst.

2. Anordnung nach Anspruch 1,
**dadurch gekennzeichnet, dass**
der passive RFID-Transponder (6) mit induktiv gekoppelter Spannungsversorgung ausgeführt ist und eine Identifikationsschaltung. (2) mit Speicherfunktion aufweist, welche herstellungs- und anwendungsspezifische Informationen sowie Prüf- und Kenndaten enthält.

3. Anordnung nach Anspruch 2,
**dadurch gekennzeichnet, dass**
die Identifikationsschaltung (2) des Transponders (6) mit einer Einrichtung zum Schutz (5) gegen starke elektromagnetische Felder Aufgrund üblicher Stoßströme bei Überspannungsschutz-Geräten (5) in Verbindung steht.

4. Anordnung nach mindestens einem der vorangegangenen Ansprüche,
**dadurch gekennzeichnet, dass**
über ein Handlesegerät die Funktion des RFID-Transponders (6) abgefragt, gegebenenfalls im Transponderspeicherchip abgelegte Daten ausgelesen und je nach Zustandskontrollergebnis ein Austausch des jeweiligen Überspannungsschütz-Geräts erfolgt.

5. Anordnung nach mindestens einem der Ansprüche 1 bis 4,
**dadurch gekennzeichnet, dass**
fest in der jeweilige Überspannungsschutz-Geräte enthaltenden Anlage ein oder mehrere Lesegeräte zur zyklischen Überwachung vorgesehen sind, wobei das Lesegerät Fehlermeldungen optisch und/oder akustisch erzeugt und Fernabfragedaten über den Zustand der jeweiligen Überspannungsschutz-Geräte bereit stellt.

6. Anordnung nach Anspruch 1,
**dadurch gekennzeichnet, dass**
der RFID-Transponder (6) als induktiv gekoppelter Transponder mit zusätzlichem Sensor zur Erfassung physikalischer Größen, die für den Zustand des oder der Überspannungsschutz-Elemente im Überspannungsschutz-Gerät relevant sind, ausgeführt ist.

## Claims

1. An arrangement for state monitoring and logging of surge protection devices, in particular during the use thereof in low-voltage networks or information technology, comprising at least one error recognition unit, which is unified with the surge protection device, wherein the error recognition unit can be read out and queried via a passive RFID transponder (6) located in a housing, and also the error recognition unit short-circuits or interrupts the transponder antenna circuit (3) in case of fault,
**characterized in that** the error recognition unit is structurally unified with the surge protection device in a housing, the error recognition unit is designed as a temperature-dependent switching unit (4), which is associated, while thermally in contact, with the respective surge protection element (9) of the surge protection device, wherein for the recognition of a fault state, the heating of the surge protection elements (9) in the case of maximum permissible power loss is turned off, the RFID transponder (6) is arranged on a circuit board (1) and the antenna (3) of the transponder (6) is embodied as a frame antenna along the outer edge regions of the circuit board (1), the RFID transponder circuit board (1) is located adjacent to a carrier (8) for accommodating the surge protection elements (9), the transponder circuit board (1) and the carrier (8) for accommodating the surge protection elements (9) are located parallel adjacent to one another in the housing of the surge protection device as replaceable, separate functional assemblies and the transponder (6) comprises a temperature sensor for detecting the temperature and therefore the load of the surge protection element or elements (9).

2. The arrangement according to Claim 1, **characterized in that** the passive RFID transponder (6) is embodied with inductively coupled voltage supply and has an identification circuit (2) having memory function, which contains production-specific and application-specific items of information and also test data and characteristic data.

3. The arrangement according to Claim 2, **characterized in that** the identification circuit (2) of the transponder (6) is connected to a unit for protection (5) against strong electromagnetic fields as a result of typical interfering currents in surge protection devices (5).

4. The arrangement according to at least one of the preceding claims,
**characterized in that**, via a handheld read device, the function of the RFID transponder (6) is queried, if necessary data stored in the transponder memory chip are read out, and a replacement of the respective surge protection device takes place depending on the state monitoring result.

5. The arrangement according to at least one of Claims 1 to 4,
**characterized in that** one or more read devices for cyclic monitoring are permanently provided in the facility containing the respective surge protection devices, wherein the read device generates error messages visually and/or acoustically and provides remote query data about the state of the respective surge protection devices.

6. The arrangement according to Claim 1,
**characterized in that** the RFID transponder (6) is embodied as an inductively coupled transponder having additional sensor for detecting physical variables, which are relevant for the state of the surge protection element or elements in the surge protection device.

## Revendications

1. Agencement pour le contrôle d'état et l'enregistrement de constats concernant des appareils de protection antisurtension, en particulier lors de leur emploi dans des réseaux à basse tension ou dans des systèmes informatiques, incluant au moins une unité de reconnaissance d'erreur unie avec l'appareil de protection antisurtension, dans lequel l'unité de reconnaissance d'erreur est susceptible d'être lue et interrogée via un transpondeur RFID passif (6) qui se trouve dans un boîtier, et dans le cas d'une erreur, l'unité de reconnaissance d'erreur met en court-circuit ou interrompt le circuit d'antenne du transpondeur (3),
**caractérisé en ce que**
l'unité de reconnaissance d'erreur est unie structurellement avec l'appareil de protection antisurtension dans un boîtier, l'unité de reconnaissance d'erreur est réalisée sous forme d'un dispositif de commutation dépendant de la température (4), lequel est associé, en étant en contact thermique, à l'élément de protection antisurtension (9) respectif de l'appareil de protection antisurtension, dans lequel, pour la reconnaissance d'un état d'erreur on utilise l'échauffement des éléments de protection antisurtension (9) à une puissance de perte maximale admissible, le transpondeur RFID (6) est agencé sur une carte à circuits (1) et l'antenne (3) du transpondeur (6) est réalisée sous la forme d'une antenne-cadre le long des zones de bordure extérieure de la carte à circuits (1), un support (8) destiné à la réception des éléments de protection antisurtension (9) se trouve au voisinage de la carte à circuits (1) du transpondeur RFID, la carte à circuits (1) du transpondeur et le support destiné à recevoir les éléments de protection antisurtension (9) se trouvent parallèles l'un à l'autre dans le boîtier de l'appareil de protection antisurtension sous la forme de groupes structurels fonctionnels interchangeables et séparés, et le transpondeur (6) inclut un capteur de température pour détecter la température et ainsi la charge de l'élément ou des éléments (9) de protection antisurtension.

2. Agencement selon la revendication 1,
**caractérisé en ce que** le transpondeur RFID passif (6) est réalisé avec une alimentation électrique à couplage inductif et comprend un circuit d'identification (2) avec fonction de mémorisation qui contient des informations spécifiques au fabricant et à l'application, ainsi que des données de contrôle et des données caractéristiques.

3. Agencement selon la revendication 2,
**caractérisé en ce que** le circuit d'identification (2) du transpondeur (6) est en liaison avec un système pour la protection (5) à l'encontre des champs électromagnétiques forts en raison de pointes de tension habituelles dans des appareils de protection antisurtension (5).

4. Agencement selon l'une au moins des revendications précédentes,
**caractérisé en ce que** la fonction du transpondeur RFID (6) est interrogée, des données mémorisées le cas échéant dans la puce mémoire du transpondeur sont lues et, selon le résultat du contrôle d'état, un échange de l'appareil de protection antisurtension respectif a lieu, au moyen d'un appareil de lecture à main.

5. Agencement selon l'une au moins des revendications 1 à 4,
**caractérisé en ce qu'**il est prévu un ou plusieurs appareils de lecture, installés de manière fixe dans l'installation qui contient les appareils de protection antisurtension respectifs, en vue d'une surveillance cyclique, et l'appareil de lecture produit des avertissements d'erreur de manière optique et/ou acoustique et met à disposition des données interrogeables à distance concernant l'état des appareils de protection antisurtension respectifs.

6. Agencement selon la revendication 1,
**caractérisé en ce que** le transpondeur RFID (6) est réalisé sous la forme d'un transpondeur à couplage inductif avec un capteur additionnel pour la détection de grandeurs physiques qui sont pertinentes pour l'état de l'élément ou des éléments de protection antisurtension dans l'appareil de protection antisurtension.
